# EUROPEAN PATENT SPECIFICATION

(11) **EP 1 421 433 B1**
(45) Date of publication and mention of the grant of the patent: **06.04.2005**
(21) Application number: 02751484.3
(22) Date of filing: 11.07.2002
(51) Int. Cl.: G02F 1/13

(54) **LIQUID CRYSTAL DISPLAY WITH REDUNDANT COLUMN DRIVE CIRCUITRY**
FLÜSSIGKRISTALLANZEIGE MIT REDUNDANTEM SPALTENSCHALTKREIS
AFFICHEUR A CRISTAUX LIQUIDES COMPRENANT DES CIRCUITS DE COMMANDE DE COLONNES REDONDANTS

(30) Priority: 03.08.2001 US 920635
(43) Date of publication of application: 26.05.2004
(73) Proprietor: Koninklijke Philips Electronics N.V., 5621 BA Eindhoven (NL)
(72) Inventor: JANSSEN, Peter, J., NL-5656 AA Eindhoven (NL); ALBU, Lucian, R., NL-5656 AA Eindhoven (NL)
(74) Representative: Raap, Adriaan Yde
(86) International application number: PCT/IB2002/002989
(87) International publication number: WO 2003/014814

(56) References cited:
- EP-A- 0 404 528
- US-A- 6 111 621
- PATENT ABSTRACTS OF JAPAN vol. 010, no. 198 (P-476), 11 July 1986 (1986-07-11) & JP 61 041126 A (CANON INC), 27 February 1986 (1986-02-27)

## Description

### BACKGROUND OF THE INVENTION

### Field of the Invention

This invention pertains to the field of image display devices, and more particularly to liquid crystal display devices, and to drive circuitry for such devices.

### Description of the Related Art

Image display devices such as liquid crystal display (LCD) devices are widely known. With reference to the following description, familiarity with conventional features of such devices will be assumed, so that only features bearing on the present invention will be described.

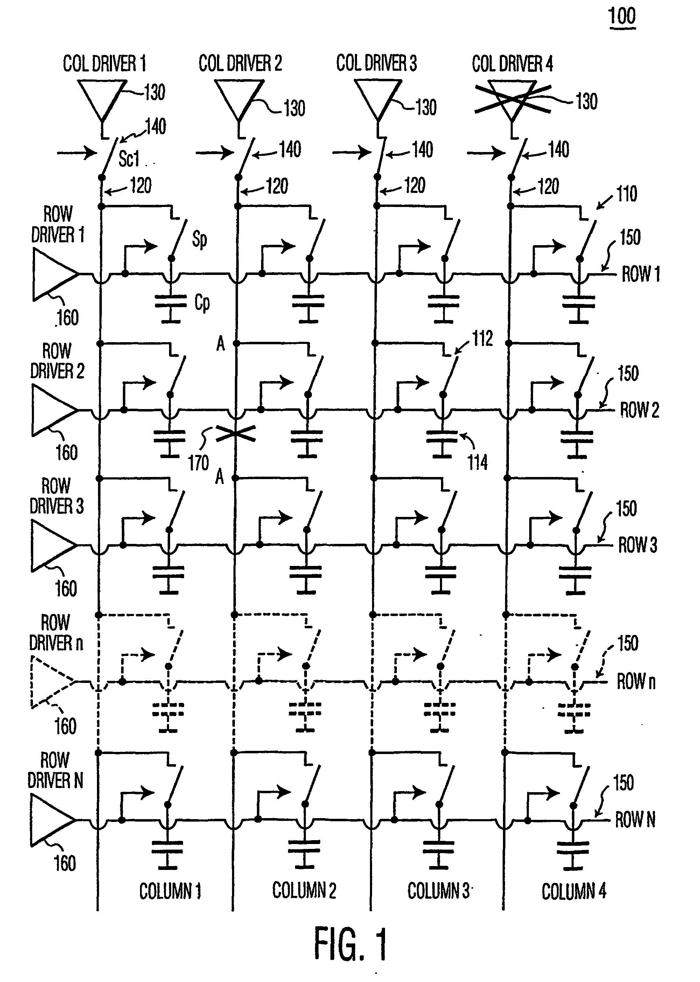

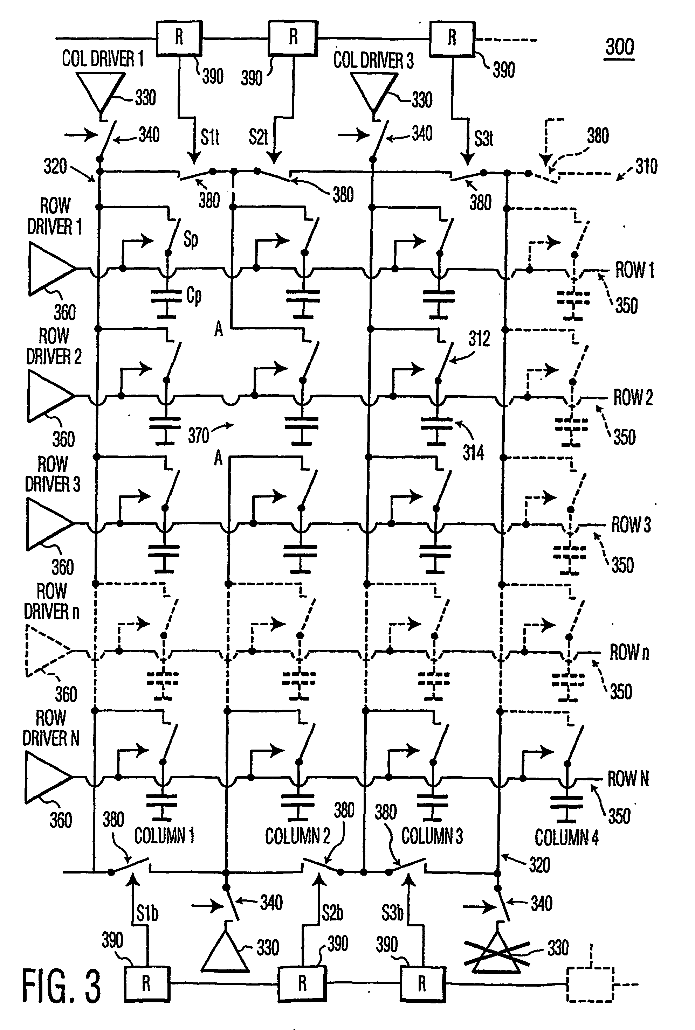

FIG. 1 shows relevant portions of an exemplary liquid crystal display (LCD) device 100. This type of LCD device is known from figure 3 of EP 825 584 A.

The LCD device 100 comprises in relevant part: a plurality of pixels 110; a plurality of column (data) lines 120 connected to the plurality of pixels 110; a plurality of column (data) drivers 130 for supplying data to pixels 110 via the column lines 120; a plurality of column driver switches 140; a plurality of row (scanning) lines 150 connected to rows of pixels 110; and a plurality of row drivers 160 connected to the row lines 120 for selecting a row of pixels 110 to which data from the column drivers 130 is to be applied.

Typically, each pixel 110 includes a pixel switching device 112 and a storage (pixel capacitor) 114. The pixel switching device 112, which may be a thin film transistor (TFT), is responsive to a scanning signal on the connected row line 150 to switch a data signal applied via the connected column line 120 into the storage device 114.

The LCD device 100 may be a liquid crystal on silicon (LCOS) type LCD device. In that case, the column (data) drivers 130, column driver switches 140, and/or row (scanning) drivers 160 may be integrated onto a same silicon substrate as the liquid crystal pixels 110.

Some problems with the prior art LCD device 100 will now be explained.

Occasionally, a break may occur in the fabrication of one or more column lines 120. For example, in Fig. 1 a break or line defect 170 is indicated between the points A and A' in the column line 120 of column 2. Because of the line defect 170, it is not possible to provide a data signal to any of the pixels 110 of column 2 from row numbers 3 to N. Accordingly, all pixels 110 of column 2 from row number 3 to row number N fail, and those pixels 110 of the display 100 will be permanently white or black, depending upon whether the device operates in a normally white or normally black mode.

Also, a column driver 130 for a particular column may be defective and fail to provide a data signal to the column line 120. For example, in Fig. 1 a failed column driver 130 is indicated for column 4. In that case, it is not possible to provide a data signal to any of the pixels 110 of column 4. Accordingly, all pixels 110 of column 4 fail, and the entire column 4 of the display 100 will be permanently white or black, depending upon whether the device operates in a normally white or normally black mode.

Accordingly, it would be desirable to provide an image display system that can operate despite one or more column line defects, or breaks, and/or failed column drivers. Other and further objects and advantages will appear hereinafter.

European patent application EP 404 528 A discloses an active matrix liquid crystal display device. It includes two spare lines running perpendicular to the source bus lines at the ends of these bus lines, respectively. In case of a defective bus line the end portions of this defective bus line are connected to the spare lines and the two spare lines are connected electrically to each other via connecting lines on a circuit board.

European patent application EP 825 584 A discloses a liquid crystal display device of the active matrix type defined in the first part of claim 1 and European patent application EP 306 011 A discloses a liquid crystal display device of the type defined in the first part of claim 16. In the case of this prior art devices a break or defect in a data line makes it impossible to provide a data signal to all of the pixels.

It is an object of the present invention to provide a liquid crystal display device which remains operable despite one or more column line defects and/or failed column driver. This object is solved, according to the invention, with the features of claim 1 and claim 16. A corresponding method of repairing a defect in a liquid crystal display device is defined in claim 8.

### BRIEF DESCRIPTION OF THE DRAWINGS

FIG. 1 shows a prior art liquid crystal display (LCD) device;
FIG. 2 shows a first embodiment of an image display device capable of operating with a column line or column driver defect;
FIG. 3 shows a second embodiment of an image display device capable of operating with a column line or column driver defect;
FIG. 4 shows a third embodiment of an image display device capable of operating with a column line or column driver defect; and
FIG. 5 shows a fourth embodiment of an image display device capable of operating with a column line or column driver defect.

### DETAILED DESCRIPTION

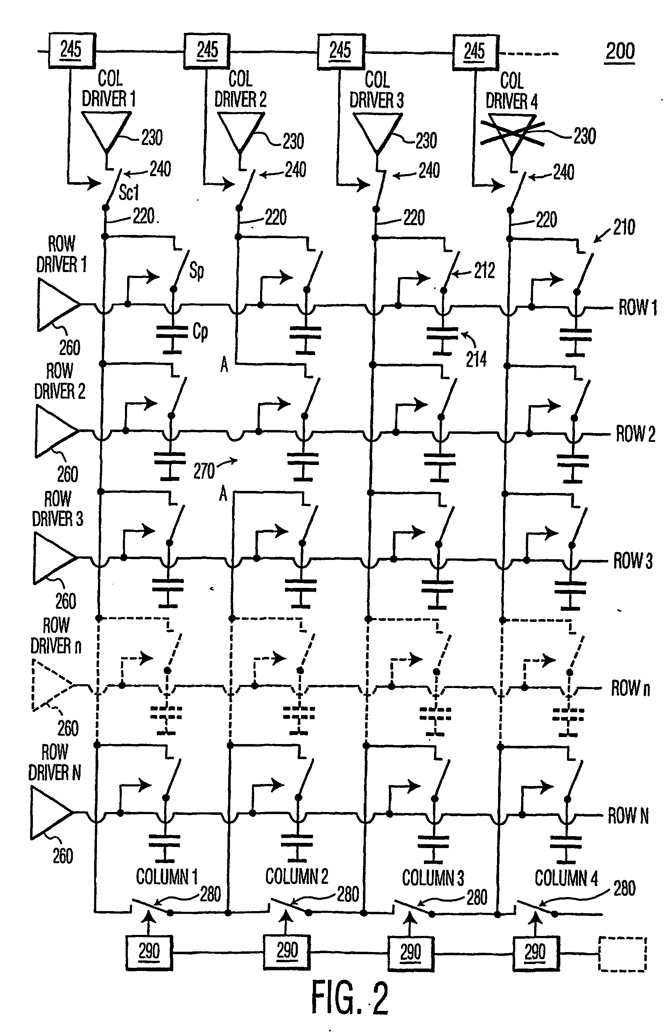

FIG. 2 shows a first embodiment of an image display device in accordance with one or more aspects of the invention. The first embodiment is described with respect to a liquid crystal display (LCD) device 200. For clarity and simplicity, those portions of the LCD device 200 relating to the present invention are illustrated.

The LCD device 200 comprises in relevant part: a plurality of pixels 210; a plurality (M) of column (data) lines 220 connected to the plurality of pixels 210; a plurality of column (data) drivers 230 for supplying data to the pixels 210 via the column lines 220; a plurality of column driver switches 240; a plurality (M) of column driver switch registers 245; a plurality (N) of row (scanning) lines 250 connected to N rows of pixels 210; a plurality of row drivers 260 connected to the row lines 250 for selecting a row of pixels 210 to which data from the column drivers 230 is to be applied; a plurality (M-1) of cross-column switches 280 each extending between two adjacent column lines 220; and a plurality (M-1) of cross-column switch registers 290 each having an output connected to a control terminal of a corresponding one of the cross-column switches 280. Beneficially, the column driver switch registers 245 and/or the cross-column switch registers 290 may be configured as shift registers.

Typically, each pixel 210 includes a pixel switching device 212, having first and second terminals and a control terminal, and a storage device (pixel capacitor) 214 connected to the first terminal of the pixel switching device 212. However, a two terminal switch such as a diode may be used. The second terminal of the pixel switching device 212 is connected to one of the column lines 220. The pixel switching device 212, which may be a thin film transistor (TFT), is responsive to a scanning signal on the connected row line 250 to selectively connect the column line 220 to the storage device 214 and thereby to store a data signal applied via the column line 220 into the storage device 214.

The LCD device 200 may be a liquid crystal on silicon (LCOS) type LCD device. In that case, the column (data) drivers 230 and/or row (scanning) drivers 260 may be integrated onto a same silicon substrate as the liquid crystal pixels 210. Also, the column driver switches 240, the column driver switch registers 245, the cross-column switches 280 and/or the cross-column switch registers 290 may be integrated onto the same substrate.

The operation of various pertinent elements of the first preferred embodiment LCD device 200 in the case of a defective column will now be explained

In Fig. 2, a break or line defect 270 is indicated between the points A and A' in the column line 220 of column 2. Because of the line defect 270, it is not possible to provide a data signal from the column driver 230 for column 2 to any of the pixels 210 for row numbers 3 to N. Accordingly, during a test of the LCD device 200, it will be determined that those pixels 210 of the LCD device 200 are permanently white or black, depending upon whether the device operates in a normally white or normally black mode.

In that case, a data value (e.g., "1" or "0") is stored into a cross-column switch register 290 connected to the control terminal of the cross-column switch 280 between columns 2 and 3, such that a control signal output by the cross-column switch register 290 causes the cross-column switch 280 between columns 2 and 3 to close. In other words, the data value stored in each cross-column switch register 290 indicates whether the corresponding cross-column switch 280 should be opened or closed. With the cross-column switch 280 between columns 2 and 3 closed, the pixels 210 for rows 3 to N of column 2 are connected to the column line 220 for column 3. Accordingly, in response to a scanning (gate) signal of the corresponding row (scanning) line 250, the pixels 210 for rows 3 to N of column 2 are driven by the data signal of column 3 to store and display image data.

Also, a column driver 230 for a particular column may be defective and fail to provide a data signal to a column line 220. For example, in Fig. 2 a failed column driver 230 is indicated for column 4. Because of the defective column driver 230, it is not possible to provide a desired data signal from the column driver 230 for column 4 to any of the pixels 210 of column 4. Accordingly, during a test of the LCD device 200, it will be determined that the pixels 210 of column 4 of the LCD device 200 are permanently white or black, depending upon whether the device operates in a normally white or normally black mode.

In that case, a data value (e.g., "1" or "0") is stored into a cross-column switch register 290 connected to the control terminal of the cross-column switch 280 between columns 3 and 4 such that a control signal output by the cross-column switch register 290 causes the cross-column switch 280 between columns 3 and 4 to close. Also, a data value is stored into a column driver switch register 245 for column 4 such that a control signal output by the column driver switch register 245 for column 4 connected to the control terminal of column driver switch 240 for column 4 causes the column driver switch 240 for column 4 to open. In other words, the data value stored in each column driver switch register 245 indicates whether the corresponding column driver switch 240 should be opened or closed. With the cross-column switch 280 between columns 3 and 4 closed, and the column driver switch 240 for column 4 opened, the pixels 210 of column 4 are connected to the column line 220 for column 3. Accordingly, in response to a scanning (gate) signal of the corresponding row (scanning) line 250, the pixels 210 for column 4 are driven by the data signal of column 3 to store and display image data.

It should be understood that, although in the above example with the line defect 270 the pixels 210 for rows 3 to N of column 2 were connected to column 3, it is possible instead to connect the pixels 210 for rows 3 to N of column 2 to column 1. Similarly, in the above example where the column driver for column 4 is defective, the pixels 210 of column 4 may be connected to column 5 instead of to column 3. Indeed, multiple columns may be connected in a variety of configurations to account for multiple defective column lines 220 and/or column drivers 230.

Beneficially, when the column driver switch registers 245 and/or the cross-column switch registers 290 are configured as shift registers, data values may be supplied for the column driver switch registers 245 and cross-column switch registers 290 of the LCD device 200 by shifting them into place using a shift enable or clock signal. Also, it is possible to either store the data permanently in the registers 245 and 290 after performing a test of the LCD device 200, or the data may be reloaded into the registers periodically, such as upon powering up the LCD device 200.

It is also possible to dynamically change the contents of the registers 290. In that case, for example, with the line defect 270, the pixels 210 for rows 3 to N of column 2 may be alternately connected to column 3 and to column 1, say, in alternating frames. This may allow for an improved display, as the human eye will tend to average the video data displayed by the pixels 210 for rows 3 to N of column 2. Similarly, in the case where the column driver for column 4 is defective, the pixels 210 of column 4 may be alternately connected to column 3 and to column 5, say, in alternating frames.

Many LCD devices employ a column (data) driver layout wherein the column (data) drivers are disposed on two sides (e.g., top and bottom) of the pixel area. Typically, in such a layout column lines are alternatingly connected to column drivers on opposite sides of the pixel area. That is, odd-numbered column lines are all connected to column drivers on one side (e.g., the top) of the pixel area, and even-numbered column lines are all connected to column drivers on the opposite side (e.g., the bottom) of the pixel area. By employing such an interleaved column driver layout, the frequency of the data signal that must be communicated to and processed by each column (data) driver can be reduced by ½.

FIG. 3 shows a second preferred embodiment of an image display device in accordance with one or more aspects of the invention. The second embodiment is described with respect to a liquid crystal display (LCD) device 300 having column (data) drivers disposed on two sides (top and bottom) of the pixel area, i.e., the so-called interleaved column (data) driver layout. For clarity and simplicity, those portions of the LCD device 300 relating to the present invention are illustrated.

The LCD device 300 comprises in relevant part: a plurality of pixels 310; a plurality (M) of column (data) lines 320 connected to the plurality of pixels 310; a plurality of column (data) drivers 330 disposed on opposite sides of the pixels 310 for supplying data to the pixels 310 via the column lines 320; a plurality of column driver switches 340; a plurality (M) of column driver switch registers (not shown); a plurality (N) of row (scanning) lines 350 connected to N rows of pixels 310; a plurality of row drivers 360 connected to the row lines 350 for selecting a row of pixels 310 to which data from the column drivers 330 is to be applied; a plurality of cross-column switches 380 each extending between two column lines 320; and a plurality of cross-column switch registers 390 each having an output connected to a control terminal of a corresponding one of the cross-column switches 380. Beneficially, the column driver switch registers and/or the cross-column switch registers 390 may be configured as shift registers.

Typically, each pixel 310 includes a pixel switching device 312, having first and second terminals and a control terminal, and a storage device (pixel capacitor) 314 connected to the first terminal of the pixel switching device 312. The second terminal of the pixel switching device 312 is connected to one of the column lines 320. The pixel switching device 312, which may be a thin film transistor (TFT), is responsive to a scanning signal on the connected row line 350 to selectively connect the column line 320 to the storage device 314 and thereby to store a data signal applied via the column line 320 into the storage device 314.

The LCD device 300 may be a liquid crystal on silicon (LCOS) type LCD device. In that case, the column (data) drivers 330 and/or row (scanning) drivers 360 may be integrated onto a same silicon substrate as the liquid crystal pixels 310. Also, the column driver switches 340, the column driver switch registers, the cross-column switches 380 and/or the cross-column switch registers 390 may be integrated onto the same substrate.

The operation of various pertinent elements of the second preferred embodiment LCD device 300 in the case of a defective column will now be explained.

The second embodiment of the LCD device 300 operates similarly to the first embodiment of the LCD device 200, except that the second embodiment of the LCD device 300 has column drivers 330, cross-column switches 380, and cross-column switch registers 390 located on two opposite sides of the pixel area.

Accordingly, for example, when a line defect 370 indicated between the points A and A' in the column line 320 of column 2 occurs, the pixels for rows 3 to N of column 2 are still connected to the column driver 330 for column 3, located on a first (bottom) side of the pixel area. However, the pixels for rows 1 and 2 are disconnected from the column driver 330 for column 2. In that case, a data value (e.g., "1" or "0") is loaded into the cross-column switch register 390 connected to the control terminal of the cross-column switch 380 between columns 2 and 3 located on the opposite (top) side of the pixel area from the column driver 330 for column 2, such that a control signal output by the cross-column switch register 390 causes the cross-column switch 380 between columns 2 and 3 to close. In other words, the data value stored in each cross-column switch register 390 indicates whether the corresponding cross-column switch 380 should be opened or closed.

With the cross-column switch 380 between columns 2 and 3 closed, the pixels 310 for rows 1 and 2 of column 2 are connected to the column line 320 for column 3. Accordingly, in response to a scanning (gate) signal of the corresponding row (scanning) line 350, the pixels 310 for rows 1 and 2 of column 2 are driven by the data signal of column 3 to store and display image data. It should be understood that it is possible to connect the pixels 310 for rows 1 and 2 of column 2 to column 1 instead of to column 3.

Also, for example, a column driver 330 for column 4 may be defective and fail to provide a data signal to a column line 320 of column 4. In that case, a data value (e.g., "1" or "0") is stored into a cross-column switch register 390 connected to one of the cross-column switches 380 (top or bottom) between columns 3 and 4, such that a control signal output by the cross-column switch register 390 causes the cross-column switch 380 between columns 3 and 4 to close. Also, a data value (e.g., "1" or "0") is stored into a column driver switch register for column 4 such that a control signal output by the column driver switch register 390 for column 4 causes the column driver switch 340 for column 4 to open. In other words, the data value stored in the column driver switch register 390 indicates whether the corresponding column driver switch 340 should be opened or closed. With one of the cross-column switches 380 between columns 3 and 4 closed, and the column driver switch 340 for column 4 opened, the pixels 310 of column 4 are connected to the column line 320 for column 3. Accordingly, in response to a scanning (gate) signal of the corresponding row (scanning) line 350, the pixels 310 for column 4 are driven by the data signal of column 3 to store and display image data.

It should be understood that, in the above example where the column driver 330 for column 4 is defective, the pixels 310 of column 4 can be connected to column 5 instead of to column 3.

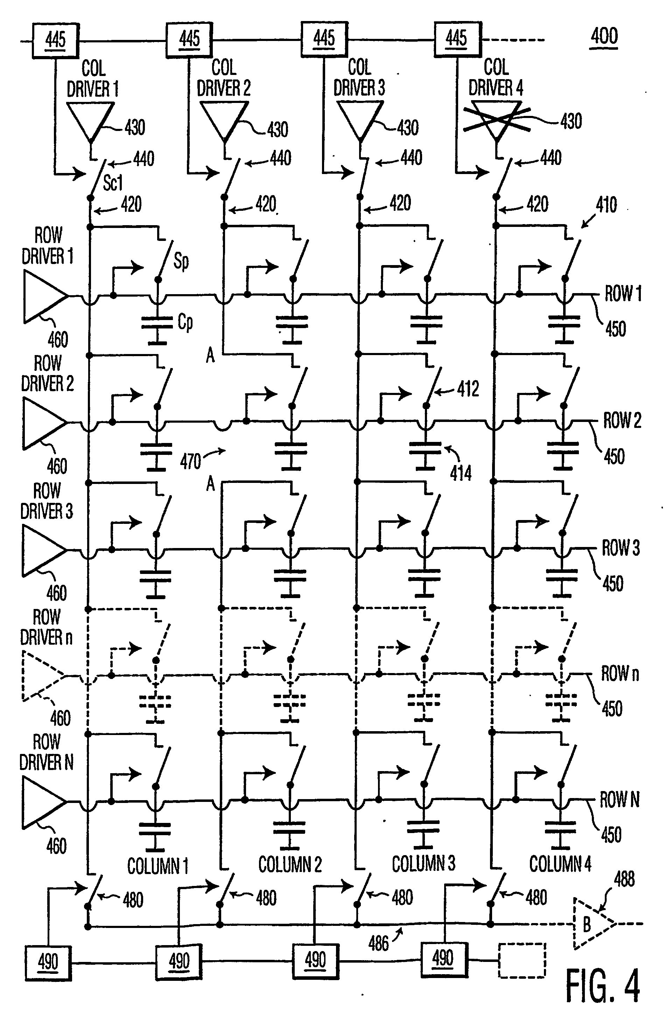

FIG. 4 shows a third embodiment of an image display device in accordance with one or more aspects of the invention. The third embodiment is described with respect to a liquid crystal display (LCD) device 400. For clarity and simplicity, those portions of the LCD device 400 relating to the present invention are illustrated.

The LCD device 400 comprises in relevant part: a plurality of pixels 410; a plurality (M) of column (data) lines 420 connected to the plurality of pixels 410; a plurality of column (data) drivers 430 for supplying data to the pixels 410 via the column lines 420; a plurality of column driver switches 440; a plurality (M) of column driver switch registers 445; a plurality (N) of row (scanning) lines 450 connected to N rows of pixels 410; a plurality of row drivers 460 connected to the row lines 450 for selecting a row of pixels 410 to which data from the column drivers 430 is to be applied; a plurality (M) of column test switches 480 each connected with a corresponding one of the column lines 420; a common test line 486 connected to each of the column test switches 480; a buffer 488 connected to the common test line 486; and a plurality (M) of column test switch registers 490 each having an output connected to a control terminal of a corresponding one of the column test switches 480. Beneficially, the column driver switch registers 445 and/or the column test switch registers 490 may be configured as shift registers.

Typically, each pixel 410 includes a pixel switching device 412, having first and second terminals and a control terminal, and a storage device (pixel capacitor) 414 connected to the first terminal of the pixel switching device 412. The second terminal of the pixel switching device 412 is connected to one of the column lines 420. The pixel switching device 412, which may be a thin film transistor (TFT), is responsive to a scanning signal on the connected row line 450 to selectively connect the column line 420 to the storage device 414 and thereby to store a data signal applied via the column line 420 into the storage device 414.

The LCD device 400 may be a liquid crystal on silicon (LCOS) type LCD device. In that case, the column (data) drivers 430 and/or row (scanning) drivers 460 may be integrated onto a same silicon substrate as the liquid crystal pixels 410. Also, the column driver switches 440, the column driver switch registers 445, the column test switches 480, the buffer 488, and/or the column test switch registers 490 may be integrated onto the same substrate.

The operation of various pertinent elements of the third preferred embodiment LCD device 400 in the case of a defective column will now be explained.

The third embodiment of the LCD device 400 operates similarly to the first embodiment of the LCD device 200, except that instead of the cross-column switches extending between pairs of adjacent columns, the third embodiment includes the column test switches 480 each connecting a corresponding column line 420 to the common test line 486. Accordingly, when a defect of a column line 420 or a column driver 430 is detected, then a data value is stored in the corresponding column test switch register 490 so as to output a control signal to cause the corresponding column test switch 480 to close, thereby connecting pixels of the defective column to the common test line 486. Also, a data value is stored in a column test switch register 490 for another properly working column, preferably an adjacent column, so as to output a control signal to cause the corresponding column test switch 480 to close, thereby also connecting the properly working column line 420 to the common test line 486. In other words, the data value stored in each cross-column switch register 490 indicates whether the corresponding cross-column switch 480 should be opened or closed. As a result, the pixels of the defective column are driven, via the common test line 486, by the data signal of a properly working (preferably adjacent) column line 420 to store and display image data.

The third embodiment is particularly useful where the LCD device includes self-calibrating circuitry to compensate for brightness variations between pixels or columns of the LCD device, including the plurality of column test switches 480. Such an LCD device is described in U.S. Patent Application US 2003 034 941 A filed on 16 August 2001 and published on 20 February 2003.

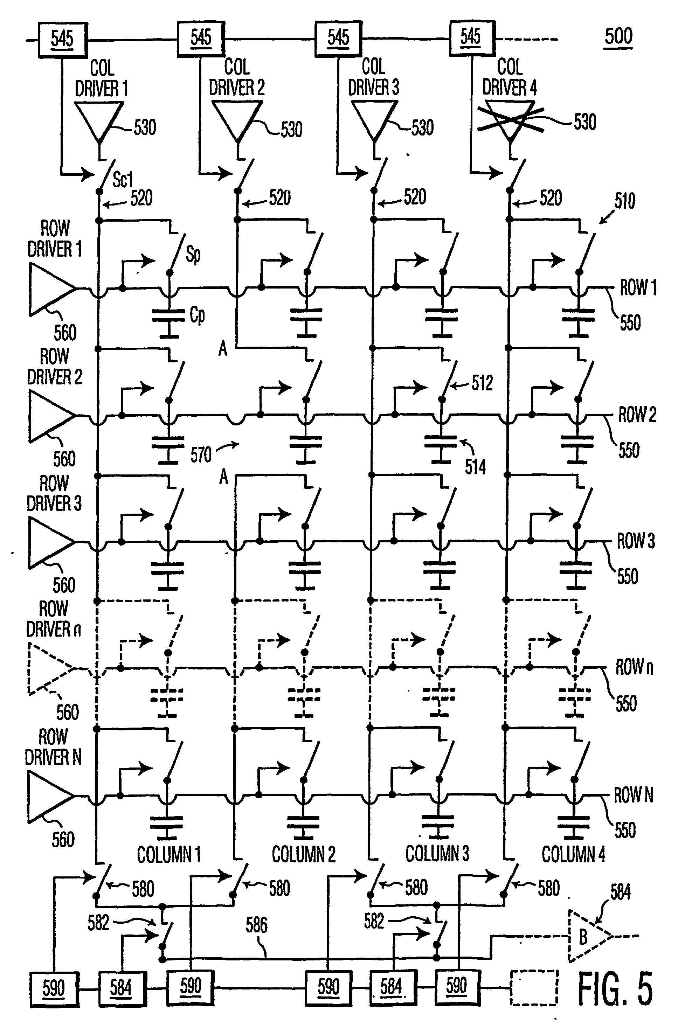

FIG. 5 shows a fourth embodiment of an image display device in accordance with one or more aspects of the invention. The fourth embodiment is described with respect to a liquid crystal display (LCD) device 500. For clarity and simplicity, those portions of the LCD device 500 relating to the present invention are illustrated.

The LCD device 500 comprises in relevant part: a plurality of pixels 510; a plurality (M) of column (data) lines 520 connected to the plurality of pixels 510; a plurality of column (data) drivers 530 for supplying data to the pixels 510 via the column lines 520; a plurality of column driver switches 540; a plurality (M) of column driver switch registers 545; a plurality (N) of row (scanning) lines 550 connected to N rows of pixels 510; a plurality of row drivers 560 connected to the row lines 550 for selecting a row of pixels 510 to which data from the column drivers 530 is to be applied; a plurality (M) of column test switches 580 each connected with a corresponding one of the column lines 520; a plurality (≈M/2) of column pair selection switches 582; a plurality of column pair selection switch registers 584 each having an output connected to a control terminal of a corresponding one of the column pair selection switches 582; a common test line 586 connected to the column pair selection switches 582; a buffer 588 connected to the common test line 586; and a plurality (M) of column test switch registers 590 each having an output connected to a control terminal of a corresponding one of the column test switches 580. Beneficially, the column driver switch registers 545 and/or the column test switch registers 590 and column pair selection switch registers 584 may be configured as shift registers.

Typically, each pixel 510 includes a pixel switching device 512, having first and second terminals and a control terminal, and a storage device (pixel capacitor) 514 connected to the first terminal of the pixel switching device 512. The second terminal of the pixel switching device 512 is connected to one of the column lines 520. The pixel switching device 512, which may be a thin film transistor (TFT), is responsive to a scanning signal on the connected row line 550 to selectively connect the column line 520 to the storage device 514 and thereby to store a data signal applied via the column line 520 into the storage device 514.

The LCD device 500 may be a liquid crystal on silicon (LCOS) type LCD device. In that case, the column (data) drivers 530 and/or row (scanning) drivers 560 may be integrated onto a same silicon substrate as the liquid crystal pixels 510. Also, the column driver switches 540, the column driver switch registers 545, the column test switches 580 and/or the column test switch registers 590 may be integrated onto the same substrate.

The operation of various pertinent elements of the fourth preferred embodiment LCD device 500 in the case of a defective column will now be explained.

The fourth embodiment of the LCD device 500 operates similarly to the third embodiment of the LCD device 400, except that it includes the column pair selection switches 582 and column pair selection switch registers 584. Unlike the third embodiment, wherein only a single column in each group can be repaired, in the fourth embodiment, multiple defects of column lines 520 and column drivers 530 within a group may be repaired, because each pair of column lines 520 has its own column pair selection switch 582 which can be opened to isolate the column pair from all other columns of the LCD device 500. As in the first to third embodiments, a data value is stored in each cross-column switch register 590 to indicate whether the corresponding cross-column switch 580 should be opened or closed.

While preferred embodiments are disclosed herein, many variations are possible which remain within the concept and scope of the invention. Such variations would become clear to one of ordinary skill in the art after inspection of the specification, drawings and claims herein. Accordingly, the invention therefore is not to be restricted except within the scope of the appended claims.

## Claims

1. A liquid crystal display device, comprising:
a plurality of pixels arranged in a matrix of rows and columns, each pixel including a pixel switching device (212) having first and second terminals and a control terminal, and a storage device (214) connected to the first terminal of the pixel switching device;
a plurality of data lines (220) connected to the second terminals of the pixels switching devices;
a plurality of data drivers (230) connected to the data lines and providing data to the pixels;
a plurality of scanning lines (250) connected to the control terminals of the pixel switching devices for selectively connecting the first and second terminals of the pixel switching devices to provide the data to the storage devices;
**characterized in that**
the liquid crystal display device further comprises at least one switch (290) responsive to a corresponding control signal to selectively connect two of the data lines (220) to each other.

2. The liquid crystal display device of claim 1, wherein each switch is a cross-column switch extending between the two data lines selectively connected to each other.

3. The liquid crystal display device of claim 2, further comprising a register (290) corresponding to each cross-column switch and providing the control signal for the cross-column switch.

4. The liquid crystal display device of claim 1, further comprising a common test line (486) and wherein the at least one switch is a column test switch (480) extending between a corresponding one of the data lines and the common test line.

5. The liquid crystal display device of claim 4, further comprising a register (490) corresponding to each switch and providing the control signal for the column test switch.

6. The liquid crystal display device of claim 1 wherein each switch is a column test switch (580), the liquid crystal display device further comprising:
- a common test line (586); and
- a plurality of common pair selection switches (582) each connected between a pair of the column test switches and the common test line.

7. The liquid crystal display device of claim 1, further comprising a register (290) corresponding to each switch and providing the control signal for the switch.

8. A method of repairing a defect in a liquid crystal display device including
a plurality of pixels arranged in a matrix of rows and columns;
a plurality of column lines (220) connected to the plurality of pixels;
a plurality of column drivers (230) connected to the column lines and providing data to the pixels;
a plurality of switches (290) each responsive to a corresponding control signal to selectively connect two of the data lines (220) to each other;
the method comprising:
identifying a defective pixel column in the liquid crystal display device, the defective pixel column including a first one of the column lines;
connecting the first one of the column lines to a second one of the column lines by closing at least one of the switches so that at least one of the pixels of the defective part of the pixel column is connected to the second one of the column lines.

9. The method of claim 8, wherein connecting the at least one pixel of the defective pixel column to the second one of the column lines comprises closing a first one of the switches connected to the defective column.

10. The method of claim 9, wherein the liquid crystal display device includes a plurality of registers (290) connected to the plurality of switches, the method further comprising storing a data value in one of the registers connected to the first switch to provide a control signal to close the first switch.

11. The method of claim 8, wherein connecting the at least one pixel of the defective pixel column to the second column line comprises closing one of the switches connected to the defective column and to the second column line.

12. The method of claim 8, wherein connecting the at least one pixel of the defective pixel column to the second column line comprises:
- closing a first one of the switches connected to the defective column and to a common test line; and
- closing a second one of the switches connected to the second column and to the common test line.

13. The method of claim 8, wherein identifying the defective pixel column comprises identifying a portion of the first column line which is not connected to any of the column drivers.

14. The method of claim 8, wherein identifying the defective pixel column comprises identifying a defective column driver (230).

15. The method of claim 14, wherein the liquid crystal display device includes a plurality of column driver switches (245) each connected to one of the column lines (220) and to one of the column drivers (230), and a plurality of registers (245) each connected to control terminals of the column driver switches, the method further comprising storing a data value in one of the registers connected to a first one of the column driver switches to provide a control signal to close the first column driver switch.

16. A liquid crystal display device, comprising:
a plurality of pixels arranged in a matrix of rows and columns;
a plurality of column lines (220) connected to the plurality of pixels;
a plurality of column drivers (230) connected to the column lines and providing data to the pixels;
**characterized in that**
the liquid crystal display device further comprises at least one switch (290) responsive to a corresponding control signal to selectively connect two of the column lines (220) to each other.

17. The device of claim 16, further comprising a plurality of registers (290) each corresponding to one of the switches and storing a data value indicating whether the corresponding switch should be opened or closed.

18. The device of claim 16, wherein each of the switches is a cross-column switch extending between the two column lines selectively connected to each other.

19. The device of claim 16, further comprising a common test line and wherein each of the switches comprises a column test switch extending between a corresponding one of the column lines and the common test line.

## Patentansprüche

1. Flüssigkristallanzeigeanordnung, welche aufweist:
- eine große Anzahl Pixel, welche in einer Matrix von Zeilen und Spalten angeordnet sind, wobei jedes Pixel ein Pixelschaltelement (212) mit einem ersten und einem zweiten Anschluss sowie einem Steueranschluss sowie ein Speicherelement (214) aufweist, welches mit dem ersten Anschluss des Pixelschaltelements verbunden ist,
- eine große Anzahl Datenleitungen (220), welche mit den zweiten Anschlüssen der Pixelschaltelemente verbunden sind,
- eine große Anzahl Datentreiber (230) welche mit den Datenleitungen verbunden sind und den Pixeln Daten zuführen,
- eine große Anzahl Abtastleitungen (250), welche mit den Steueranschlüssen der Pixelschaltelemente verbunden sind, um den ersten und zweiten Anschluss der Pixelschaltelemente selektiv zu verbinden und den Speicherelementen Daten zuzuführen,
**dadurch gekennzeichnet, dass**
- die Flüssigkristallanzeigeanordnung weiterhin mindestens einen Schalter (290) aufweist, welcher auf ein entsprechendes Steuersignal anspricht, um zwei der Datenleitungen (220) miteinander selektiv zu verbinden.

2. Flüssigkristallanzeigeanordnung nach Anspruch 1, wobei jeder Schalter durch einen Querspaltenschalter dargestellt ist, welcher sich zwischen den beiden, selektiv miteinander verbundenen Datenleitungen erstreckt.

3. Flüssigkristallanzeigeanordnung nach Anspruch 2, welche weiterhin ein Register (290) aufweist, welches jedem Querspaltenschalter zugeordnet ist und das Steuersignal für den Querspaltenschalter abgibt.

4. Flüssigkristallanzeigeanordnung nach Anspruch 1, welche weiterhin eine gemeinsame Testleitung (486) aufweist, wobei der mindestens eine Schalter durch einen Spaltentestschalter (480) dargestellt, welcher sich zwischen einer entsprechenden Datenleitung und der gemeinsamen Testleitung erstreckt.

5. Flüssigkristallanzeigeanordnung nach Anspruch 4, welche weiterhin ein Register (490) aufweist, welches jedem Schalter zugeordnet ist und das Steuersignal für den Spaltentestschalter abgibt.

6. Flüssigkristallanzeigeanordnung nach Anspruch 1, wobei jeder Schalter durch einen Spaltentestschalter (580) dargestellt ist, wobei die Flüssigkristallanzeigeanordnung weiterhin aufweist:
- eine gemeinsame Testleitung (586) und
- eine große Anzahl Spaltenpaaransteuerungsschalter (582), welche jeweils zwischen einem Paar Spaltentestschalter und der gemeinsamen Testleitung geschaltet sind.

7. Flüssigkristallanzeigeanordnung nach Anspruch 1, welche weiterhin ein Register (290) aufweist, welches jedem Schalter zugeordnet ist und das Steuersignal für den Schalter abgibt.

8. Verfahren zur Behebung eines Defekts in einer Flüssigkristallanzeigeanordnung, welche aufweist:
- eine große Anzahl Pixel, welche in einer Matrix von Zeilen und Spalten angeordnet sind,
- eine große Anzahl Spaltenleitungen (220), welche mit der großen Anzahl Pixel verbunden sind,
- eine große Anzahl Spaltentreiber (230), welche mit den Spaltenleitungen verbunden sind und den Pixeln Daten zuführen,
- eine große Anzahl Schalter (290), welche jeweils auf ein entsprechendes Steuersignal ansprechen, um zwei der Datenleitungen (220) miteinander selektiv zu verbinden,
wobei nach dem Verfahren
- eine defekte Pixelspalte in der Flüssigkristallanzeigeanordnung ermittelt wird, wobei die defekte Pixelspalte eine erste Spaltenleitung aufweist,
- die erste Spaltenleitung mit einer zweiten Spaltenleitung durch Schließen von mindestens einem der Schalter verbunden wird, so dass mindestens eines der Pixel des defekten Teils der Pixelspalte mit der zweiten Spaltenleitung verbunden wird.

9. Verfahren nach Anspruch 8, wobei mit Verbinden des mindestens einen Pixels der defekten Pixelspalte mit der zweiten Spaltenleitung ein erster Schalter, der mit der defekten Spalte verbunden ist, geschlossen wird.

10. Verfahren nach Anspruch 9, wobei die Flüssigkristallanzeigeanordnung eine große Anzahl Register (290) aufweist, welche mit der großen Anzahl Schalter verbunden sind, wobei nach dem Verfahren weiterhin ein Datenwert in einem der mit dem ersten Schalter verbundenen Register gespeichert wird, um zur Schließung des ersten Schalters ein Steuersignal abzugeben.

11. Verfahren nach Anspruch 8, wobei mit Verbinden des mindestens einen Pixels der defekten Pixelspalte mit der zweiten Spaltenleitung einer der mit der defekten Spalte und mit der zweiten Spaltenleitung verbundenen Schalter geschlossen wird.

12. Verfahren nach Anspruch 8, wobei mit Verbinden des mindestens einen Pixels der defekten Pixelspalte mit der zweiten Spaltenleitung
- ein erster Schalter, welcher mit der defekten Spalte und mit einer gemeinsamen Testleitung verbunden ist, geschlossen wird, und
- ein zweiter Schalter, welcher mit der zweiten Spalte und mit der gemeinsamen Testleitung verbunden ist, geschlossen wird.

13. Verfahren nach Anspruch 8, wobei mit Nachweisen der defekten Pixelspalte ein Teil der ersten Spaltenleitung, welcher nicht mit einem der Spaltentreiber verbunden ist, ermittelt wird.

14. Verfahren nach Anspruch 8, wobei mit Nachweisen der defekten Pixelspalte ein defekter Spaltentreiber (230) ermittelt wird.

15. Verfahren nach Anspruch 14, wobei die Flüssigkristallanzeigeanordnung eine große Anzahl Spaltentreiberschalter (240), welche jeweils mit einer der Spaltenleitungen (220) und einem der Spaltentreiber (230) verbunden sind, sowie eine große Anzahl Register (245) aufweist, welche jeweils mit Steueranschlüssen der Spaltentreiberschalter verbunden sind, wobei nach dem Verfahren weiterhin ein Datenwert in einem der mit einem ersten Spaltentreiberschalter verbundenen Register gespeichert wird, um ein Steuersignal zur Schließung des ersten Spaltentreiberschalters abzugeben.

16. Flüssigkristallanzeigeanordnung, welche aufweist:
- eine große Anzahl Pixel, welche in einer Matrix von Zeilen und Spalten angeordnet sind,
- eine große Anzahl Spaltenleitungen (220), welche mit der großen Anzahl Pixel verbunden sind,
- eine große Anzahl Spaltentreiber (230), welche mit den Spaltenleitungen verbunden sind und den Pixeln Daten zuführen,
**dadurch gekennzeichnet, dass**
die Flüssigkristallanzeigeanordnung weiterhin mindestens einen Schalter (290) aufweist, welcher auf ein entsprechendes Steuersignal anspricht, um zwei der Spaltenleitungen (220) miteinander selektiv zu verbinden.

17. Anordnung nach Anspruch 16, welche weiterhin eine große Anzahl Register (290) aufweist, welche jeweils einem der Schalter zugeordnet sind und einen Datenwert speichern, welcher signalisiert, ob der entsprechende Schalter geöffnet oder geschlossen werden soll.

18. Anordnung nach Anspruch 16, wobei jeder der Schalter durch einen Querspaltenschalter dargestellt ist, welcher sich zwischen den beiden Spaltenleitungen, welche selektiv miteinander verbunden sind, erstreckt.

19. Anordnung nach Anspruch 16, welche weiterhin eine gemeinsame Testleitung aufweist, wobei jeder der Schalter einen Spaltentestschalter aufweist, welcher sich zwischen einer entsprechenden Spaltenleitung und der gemeinsamen Testleitung erstreckt.

## Revendications

1. Dispositif d'affichage à cristaux liquides, comprenant :
une pluralité de pixels agencés en une matrice de rangées et de colonnes, chaque pixel incluant un dispositif de commutation de pixel (212) comprenant des première et deuxième bornes et une borne de commande, et un dispositif de stockage (214) connecté à la première borne du dispositif de commutation de pixel ;
une pluralité de lignes de données (220) connectées aux deuxièmes bornes des dispositifs de commutation de pixel ;
une pluralité de circuits de commande de données (230) connectés aux lignes de données et fournissant des données aux pixels ;
une pluralité de lignes de balayage (250) connectées aux bornes de commande des dispositifs de commutation de pixel pour connecter de manière sélective les première et deuxième bornes des dispositifs de commutation de pixel pour fournir les données aux dispositifs de stockage ;
**caractérisé en ce que**
le dispositif d'affichage à cristaux liquides comprend en outre au moins un commutateur (290) réagissant à un signal de commande correspondant pour connecter de manière sélective deux des lignes de données (220) l'une à l'autre.

2. Dispositif d'affichage à cristaux liquides suivant la revendication 1, dans lequel chaque commutateur est un commutateur entre deux colonnes s'étendant entre les deux lignes de données connectées de manière sélective l'une à l'autre.

3. Dispositif d'affichage à cristaux liquides suivant la revendication 2, comprenant en outre un registre (290) correspondant à chaque commutateur entre deux colonnes et fournissant le signal de commande correspondant au commutateur entre deux colonnes.

4. Dispositif d'affichage à cristaux liquides suivant la revendication 1, comprenant en outre une ligne de contrôle commune (486) et dans lequel le au moins un commutateur est un commutateur de contrôle de colonne (480) s'étendant entre une ligne correspondante parmi les lignes de données et la ligne de contrôle commune.

5. Dispositif d'affichage à cristaux liquides suivant la revendication 4, comprenant en outre un registre (490) correspondant à chaque commutateur et fournissant le signal de commande correspondant au commutateur de contrôle de colonne.

6. Dispositif d'affichage à cristaux liquides suivant la revendication 1, dans lequel chaque commutateur est un commutateur de contrôle de colonne (580), le dispositif d'affichage à cristaux liquides comprenant en outre :
- une ligne de contrôle commune (586), et
- une pluralité de commutateurs de sélection de paire de colonnes (582) connectés chacun entre une paire des commutateurs de contrôle de colonne et la ligne de contrôle commune.

7. Dispositif d'affichage à cristaux liquides suivant la revendication 1, comprenant en outre un registre (290) correspondant à chaque commutateur et fournissant le signal de commande correspondant au commutateur.

8. Procédé de réparation d'un défaut dans un dispositif d'affichage à cristaux liquides comprenant :
une pluralité de pixels agencés en une matrice de rangées et de colonnes ;
une pluralité de lignes de colonnes (220) connectées à la pluralité de pixels ;
une pluralité de circuits de commande de colonnes (230) connectés aux lignes de colonnes et fournissant des données aux pixels ;
une pluralité de commutateurs (290) réagissant chacun à un signal de commande correspondant pour connecter de manière sélective deux des lignes de données (220) l'une à l'autre ;
le procédé comprenant les étapes suivantes :
l'identification d'une colonne de pixels défectueuse dans le dispositif d'affichage à cristaux liquides, la colonne de pixels défectueuse incluant une première des lignes de colonnes ;
la connexion de la première des lignes de colonnes à une deuxième des lignes de colonnes en fermant au moins un des commutateurs de sorte qu'au moins un des pixels de la partie défectueuse de la colonne de pixels défectueuse est connecté à la deuxième des lignes de colonnes.

9. Procédé suivant la revendication 8, dans lequel la connexion du au moins un pixel de la colonne de pixels défectueuse à la deuxième des lignes de colonnes comprend la fermeture d'un premier des commutateurs connectés à la colonne défectueuse.

10. Procédé suivant la revendication 9, dans lequel le dispositif d'affichage à cristaux liquides comprend une pluralité de registres (290) connectés à la pluralité de commutateurs, le procédé comprenant en outre le stockage d'une valeur de données dans un des registres connectés au premier commutateur pour fournir un signal de données afin de fermer le premier commutateur.

11. Procédé suivant la revendication 8, dans lequel la connexion du au moins un pixel de la colonne de pixels défectueuse à la deuxième ligne de colonne comprend la fermeture d'un des commutateurs connectés à la colonne défectueuse et à la deuxième ligne de colonne.

12. Procédé suivant la revendication 8, dans lequel la connexion du au moins un pixel de la colonne de pixels défectueuse à la deuxième ligne de colonne comprend les étapes suivantes :
- la fermeture d'un premier des commutateurs connectés à la colonne défectueuse et à une ligne de contrôle commune, et
- la fermeture d'un deuxième des commutateurs connectés à la deuxième colonne et à la ligne de contrôle commune.

13. Procédé suivant la revendication 8, dans lequel l'identification de la colonne de pixels défectueuse comprend l'identification d'une partie de la première ligne de colonne qui n'est pas connectée à l'un quelconque des circuits de commande de colonne.

14. Procédé suivant la revendication 8, dans lequel l'identification de la colonne de pixels défectueuse comprend l'identification d'un circuit de commande de colonne (230) défectueux.

15. Procédé suivant la revendication 14, dans lequel le dispositif d'affichage à cristaux liquides comprend une pluralité de commutateurs de circuits de commande de colonnes (245) connectés chacun à une des lignes de colonnes (220) et à un des circuits de commande de colonnes (230) et une pluralité de registres (245) connectés chacun à des bornes de commande des commutateurs de circuits de commande de colonnes, le procédé comprenant en outre le stockage d'une valeur de données dans un des registres connectés à un premier des commutateurs de circuits de commande de colonnes pour fournir un signal de commande pour fermer le premier commutateur de circuit de commande de colonne.

16. Dispositif d'affichage à cristaux liquides, comprenant :
une pluralité de pixels agencés en une matrice de rangées et de colonnes ;
une pluralité de lignes de colonnes (220) connectées à la pluralité de pixels ;
une pluralité de circuits de commande de colonnes (230) connectés aux lignes de colonnes et fournissant des données aux pixels ;
**caractérisé en ce que**
le dispositif d'affichage à cristaux liquides comprend en outre au moins un commutateur (290) réagissant à un signal de commande correspondant pour connecter de manière sélective deux des lignes de colonnes (220) l'une à l'autre.

17. Dispositif suivant la revendication 16, comprenant en outre une pluralité de registres (290) correspondant chacun à un des commutateurs et stockant une valeur de données indiquant si le commutateur correspondant doit être ouvert ou fermé.

18. Dispositif suivant la revendication 16, dans lequel chacun des commutateurs est un commutateur entre deux colonnes s'étendant entre les deux lignes de colonnes connectées de manière sélective l'une à l'autre.

19. Dispositif suivant la revendication 16, comprenant en outre une ligne de contrôle commune et dans lequel chacun des commutateurs comprend un commutateur de contrôle de colonne s'étendant entre une correspondante des lignes de colonnes et la ligne de contrôle commune.
